# EUROPEAN PATENT SPECIFICATION

(11) **EP 4 451 113 B1**
(45) Date of publication and mention of the grant of the patent: **26.11.2025**
(21) Application number: 24167602.2
(22) Date of filing: 28.03.2024
(51) Int. Cl.: G06F 8/65, H04L 67/00, H04W 4/40

(54) **METHOD AND SYSTEM FOR REMOTE SOFTWARE UPDATE**
VERFAHREN UND SYSTEM ZUR FERNAKTUALISIERUNG VON SOFTWARE
PROCÉDÉ ET SYSTÈME DE MISE À JOUR DE LOGICIEL À DISTANCE

(30) Priority: 28.03.2023 CN 202310318087
(43) Date of publication of application: 23.10.2024
(73) Proprietor: Bayerische Motoren Werke Aktiengesellschaft, 80809 München (DE)
(72) Inventor: Yan, Dory, Beijing (Haidian), 100094 (CN)

(56) References cited:
- US-A1- 2019 058 963

## Description

### FIELD OF THE INVENTION

The present disclosure relates to the field of Vehicle-to-Everything (V2X), and in more particular, to a method and a system for remote software update.

### BACKGROUND OF THE INVENTION

With development of advanced assisted driving and autonomous driving, vehicles become more and more intelligent. These smart vehicles are equipped with a large number of software programs. At present, OTA (Over-the-Air) can be used to update and upgrade the software of vehicles, so as to optimize the vehicle software and add more functions.

The present remote software update technology (i.e. OTA technology) is implemented in a centralized way (e.g. star topology), which refers to the technology of remote management of firmware, data and applications on vehicle parts terminals through mobile communication networks. It is simply divided into three steps: first, update software is uploaded to an OTA center, then the OTA center wirelessly transmits the update software to vehicle-end, and finally the vehicle-end automatically updates the software.

However, this traditional approach has bandwidth limitation problems (for example, there is a specified maximum bandwidth limit of 20 MHz for V2X), and when a large number of vehicles trigger software updates at the same time, it may lead to server crash or slow download problems.

Document US 2019/058963 relates to a method of wirelessly communicating data originating at a central facility between a plurality of vehicles using vehicle-to-vehicle short-range wireless communications that includes wirelessly receiving, at a seed vehicle, one or more data files that have been encoded into data chunks from a central facility; storing the data chunks included in the received data file(s) at the vehicle; receiving interest messages for the data file(s) at the seed vehicle from each of a plurality of other vehicles via a short-range wireless broadcast, wherein the interest messages include one or more data file names and, for each data file name, the identity of the data chunks requested; identifying data files and data chunks existing in more than one received interest message; and transmitting the data chunks to the plurality of vehicles via the short-range wireless broadcast.

Therefore, it is desirable to provide an improved remote software update scheme, thereby avoiding server crash problems and bandwidth limitation/congestion problems caused by a large number of simultaneous remote update packages acquisition/download, and further improving remote upgrade experience of users.

### SUMMARY OF THE INVENTION

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In view of the above problems, in accordance with a first aspect of the present disclosure, a remote software update method for a vehicle is provided, the method comprising: determining whether a target software package needs to be acquired for software update, wherein the target software package is divided into a plurality of target sub-packages; receiving one or more of the plurality of target sub-packages from a seed vehicle within a V2X communication distance from the vehicle in response to determining that a software update is to be performed, the seed vehicle having acquired one or more of the plurality of target sub-packages; and completing the remote software update when all target sub-packages of the target software package are received.

In the embodiment of the present disclosure, by utilizing a distributed topology to obtain update sub-packages from various seed vehicles which have downloaded update packages via V2V communication by using seed download technology during remote software update/upgrade, so as to realize the software update/upgrade of the vehicle end, the server collapse problem and the bandwidth limitation problem caused by a large number of simultaneous remote update package acquisition/download can be avoided, and it is enabled that the more vehicles downloading the update packages, the faster the software update can be completed, and this further improve the remote upgrade experience of users.

In accordance with an embodiment of the present disclosure, determining whether a target software package needs to be acquired for software update further comprises: determining that a target software package needs to be acquired for software update upon receiving a software update notification from a remote update server or upon checking out that a current software version does not coincide with a latest software version from the remote update server.

In accordance with a further embodiment of the present disclosure, receiving one or more of the plurality of target sub-packages from the seed vehicle further comprises: passively receiving one or more of the plurality of target sub-packages from the seed vehicle, the one or more of the plurality of target sub-packages being randomly or sequentially broadcast; and discarding target sub-packages the vehicle has owned.

In accordance with a further embodiment of the present disclosure, receiving one or more of the plurality of target sub-packages from the seed vehicle further comprises: requesting the seed vehicle for desired target sub-packages; and receiving the desired target sub-packages from the seed vehicle, wherein transmission of the desired target sub-packages is prioritized by the seed vehicle.

In accordance with a further embodiment of the present disclosure, the method further comprising: broadcasting as a seed vehicle the received one or more of the plurality of target sub-packages to other vehicles within a V2X communication distance from the vehicle upon receiving one or more of the plurality of target sub-packages.

In accordance with a further embodiment of the present disclosure, a number of target sub-packages of the target software package is determined based on a size of the target software package and network bandwidth limitations.

In accordance with the present disclosure, the number of target sub-packages of the target software package is adjusted based on a current network congestion situation, wherein the number of target sub-packages is small when the network is idle and large when the network is busy.

In accordance with a further embodiment of the present disclosure, the method further comprising: downloading remaining target sub-packages that have not been received from the seed vehicle directly from a remote update server when not all target sub-packages of the target software package have been received.

In accordance with a further embodiment of the present disclosure, the seed vehicle is selected by ranking one or more of: virtual scores indicating contribution degrees as a seed vehicle; software installation completion rates; software installation duration; or user levels.

In accordance with a second aspect of the present disclosure, a remote software update method for a vehicle is provided, the method comprising: receiving a target software package from a remote update server to complete a remote software update in response to receiving a software update notification from the remote update server, wherein the target software package is divided into a plurality of target sub-packages; and broadcasting one or more of the plurality of target sub-packages randomly or sequentially to other vehicles within a V2X communication distance from the vehicle.

In accordance with an embodiment of the present disclosure, the method further comprising: receiving a request for desired target sub-packages from another vehicle within a V2X communication distance from the vehicle; and prioritizing transmitting the desired target sub-packages to said another vehicle.

In accordance with a third aspect of the present disclosure, a remote software update system for a vehicle is provided, the system comprising: an update check module configured to determine whether a target software package needs to be acquired for software update, wherein the target software package is divided into a plurality of target sub-packages; an update acquisition module configured to receive one or more of the plurality of target sub-packages from a seed vehicle within a V2X communication distance from the vehicle in response to determining that a software update is to be performed, the seed vehicle having acquired one or more of the plurality of target sub-packages; and an update completion module configured to complete the remote software update when all target sub-packages of the target software package are received.

In accordance with an embodiment of the present disclosure, the update acquisition module further configured to: receive one or more of the plurality of target sub-packages from the seed vehicle passively, the one or more of the plurality of target sub-packages being randomly or sequentially broadcast; and discard existing target sub-packages of the vehicle.

In accordance with a further embodiment of the present disclosure, the update acquisition module further configured to: request the seed vehicle for desired target sub-packages; and receive the desired target sub-packages from the seed vehicle, wherein transmission of the desired target sub-packages is prioritized by the seed vehicle.

In accordance with a further embodiment of the present disclosure, the system further comprising: an update broadcast module configured to broadcast as a seed vehicle the received one or more of the plurality of target sub-packages to other vehicles within a V2X communication distance from the vehicle upon receiving one or more of the plurality of target sub-packages.

In accordance with a fourth aspect of the present disclosure, a vehicle comprising the remote software update system of any of preceding aspects is provided.

In accordance with a fifth aspect of the present disclosure, a computer-readable storage medium storing instructions that, when executed, cause a vehicle to perform the method of any of preceding aspects is provided.

These and other features and advantages will become apparent by reading the following detailed description with reference to the associated drawings. It should be appreciated that the foregoing general description and the following detailed description are illustrative only and do not limit the claimed aspects.

### BRIEF DESCRIPTION OF THE DRAWINGS

In order to be able to understand in detail the manner employed by the above-described features of the present disclosure, the contents briefly summarized above can be detailed described with reference to various embodiments, with some aspects illustrated in the accompanying drawings. It should be noted however that the drawings illustrate only certain typical aspects of the present disclosure and therefore should not be considered as limiting its scope since the description may allow for other equally valid aspects.
Figure 1 illustrates a schematic architectural diagram of a remote software update system on the vehicle side in accordance with an embodiment of the present disclosure.
Figure 2 illustrates a schematic diagram of a software package division and sub-package structure in accordance with an embodiment of the present disclosure.
Figure 3 illustrates a schematic diagram of a software package passive reception mode in accordance with an embodiment of the present disclosure.
Figure 4 illustrates a schematic diagram of a software package active reception mode in accordance with an embodiment of the present disclosure.
Figure 5 illustrates an example flow diagram of a remote software update method for a user vehicle in accordance with an embodiment of the present disclosure.
Figure 6 illustrates an example flow diagram of a remote software update method for a seed vehicle in accordance with an embodiment of the present disclosure.
Figure 7 illustrates an exemplary vehicle supporting remote software update in accordance with an embodiment of the present disclosure.
Figure 8 illustrates a schematic architecture diagram of a remote software update system in accordance with an embodiment of the present disclosure.

### DETAILED DESCRIPTION

The present disclosure is described in detail below in conjunction with the accompanying drawings and features of the disclosure will be further apparent in the following specific description. The term "vehicle" as used throughout the specification refers to any type of cars, including but not limited to sedans, wagons, trucks, buses, etc.

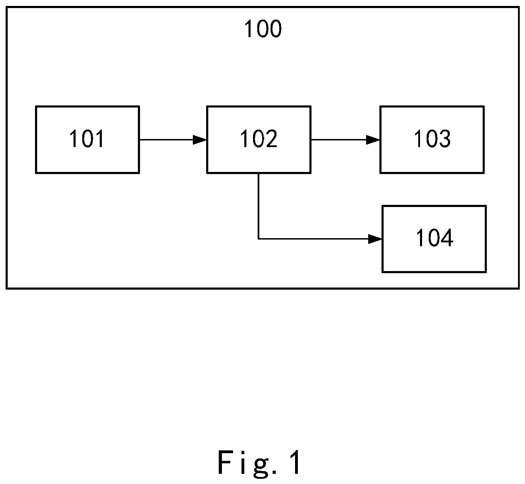

Figure 1 illustrates a schematic architectural diagram of a remote software update system 100 on the vehicle side in accordance with an embodiment of the present disclosure. As shown in Fig. 1, the system 100 may include at least an update check module 101, an update acquisition module 102 and an update completion module 103.

The update check module 101 may determine whether a target software package needs to be acquired for software update, wherein the target software package is divided into a plurality of target sub-packages.

In one embodiment, the update check module 101 may determine that a target software package (i.e. upgrade package) needs to be acquired for software update upon receiving a software update notification from a remote update server.

In another embodiment, the update check module 101 may determine that a target software package needs to be acquired for software update upon checking out that a current software version does not coincide with a latest software version from a remote update server (e.g. an OTA server). For example, the current version information of the target software can be checked at the vehicle end, and the updated version information on the OTA server is compared with the current version information. If the updated version information on the OTA server is higher than the current version information, it is determined that the upgrade package needs to be acquired to update the target software.

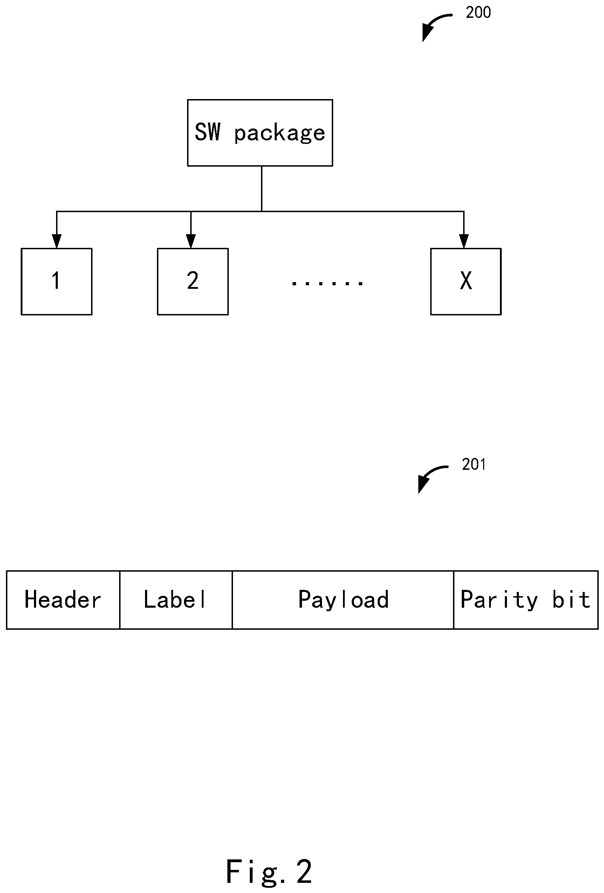

In order to realize remote software update by using seed download technology, it is necessary to divide the upgrade package of target software (i.e., target software package) into several target sub-packages. As shown in Fig. 2, Fig. 2 illustrates a schematic diagram of a software package division 200 and a sub-package structure 201 according to one embodiment of the present disclosure. In Figure 2, the target software package is divided into X target sub-packages with labels 1 to X.

In one embodiment, a number of target sub-packages of the target software package may be determined based on a size of the target software package and network bandwidth limitations.

In one example, the number of target sub-packages X can be calculated as follows: X = total size of a target software package/network bandwidth limit. For example, if the total size of a target software package is 1Gb and the network bandwidth limit is 20M, the number of target sub-packages X is 1Gb/20Mb = 50, that is, the target software package is divided into 50 target sub-packages.

Of course, it will be appreciated that the number of sub-packages is not always fixed when performing package division and that the number of sub-packages can be determined and adjusted using algorithms known to those skilled in the art.

According to the invention, the number of target sub-packages of the target software package may be adjusted based on a current network congestion situation, wherein, when the network is idle, the smaller the number of target sub-packages is (which means a larger size of each target sub-package), the higher the update efficiency will be, while when the network is busy but there are more seed vehicles around, the larger the number of target sub-packages is (which means a smaller size of each target sub-package, thus facilitating transmission), the higher the update efficiency will be.

Additionally, as shown at 201 in Fig. 2, a target sub-package may include a header, a label (e.g. 1 to X), a payload and a check bit.

Returning to Fig. 1, the update acquisition module 102 may receive one or more of the plurality of target sub-packages from a seed vehicle within a V2X communication distance from the vehicle in response to a determination that a software update is to be performed, the seed vehicle having acquired one or more of the plurality of target sub-packages.

A seed vehicle may refer to a vehicle that broadcasts one or more target sub-packages that have been acquired/downloaded to nearby vehicles via V2X communication. The seed vehicle may be either an initial seed vehicle that initially downloads the software update package directly from the OTA server, or a vehicle that becomes a seed vehicle after obtaining one or more target sub-packages from other vehicles via V2X communication.

In one embodiment, the initial seed vehicle may be selected by ranking one or more of: virtual scores indicating contribution degrees as seed vehicles (e.g., the higher the number of sub-packages broadcast as a seed vehicle, the higher the contribution degree is); software installation completion rates; software installation duration; or user levels (e.g. according to vehicle type).

In one embodiment, the update acquisition module 102 may employ a passive reception mode to receive one or more target sub-packages from a seed vehicle. Specifically, the update acquisition module 102 may passively receive one or more of the plurality of target sub-packages from the seed vehicle that are randomly or sequentially broadcasted, and may discard existing target sub-packages of the vehicle.

In another embodiment, the update acquisition module 102 may employ an active reception mode to receive one or more target sub-packages from a seed vehicle. Specifically, the update acquisition module 102 may request the seed vehicle for desired target sub-packages; and receive the desired target sub-packages from the seed vehicle, wherein transmission of the desired target sub-packages is prioritized by the seed vehicle.

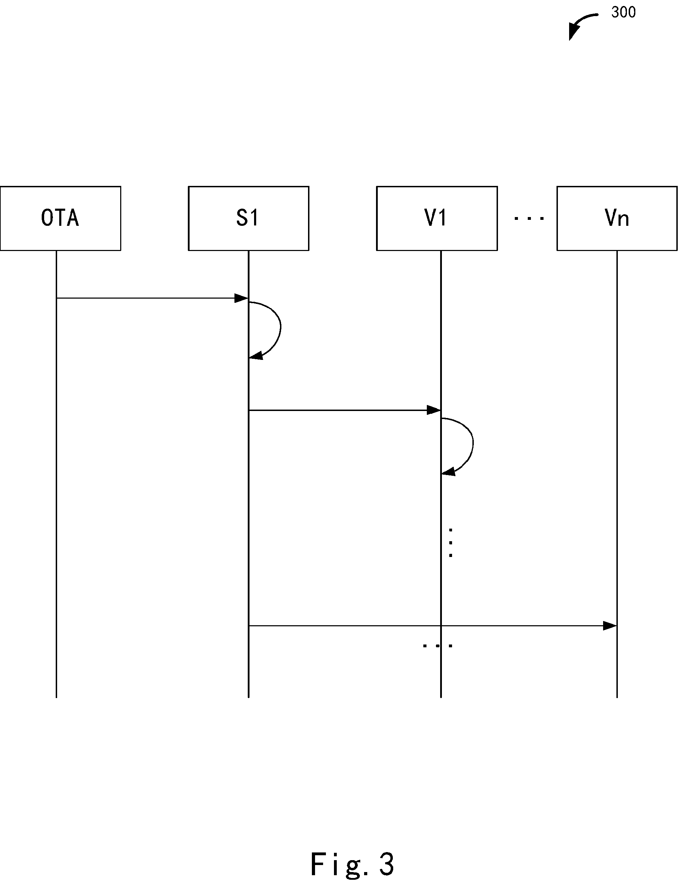

The above two different reception modes (i.e. the passive reception mode and the active reception mode) can be described in further details with reference to Figs. 3-4 below.

In one embodiment, the update acquisition module 102 may determine whether to continue receiving the remaining target sub-packages from seed vehicles or download the remaining target sub-packages directly from a remote update server when not all target sub-packages of the target software package have been received.

Preferably, the user may be given an additional virtual score if it is determined to continue receiving the remaining target sub-packages from seed vehicles because it contributes to the entire software update process, while no additional score may be obtained if it is determined to download the remaining target sub-packages directly from the remote update server. These virtual scores in turn can be used for the next seed vehicle selection. The higher the score, the higher the probability of being selected as the initial seed vehicle, and the initial seed vehicles can get the latest software upgrade first.

The update completion module 103 may complete the remote software update when all target sub-packages of the target software package are received.

Preferably, the system 100 may also include an update broadcast module 104 which may broadcast, as a seed vehicle, the received one or more of the plurality of target sub-packages to other vehicles within a V2X communication distance from the vehicle upon receiving one or more of the plurality of target sub-packages.

In one embodiment, upon receiving all target sub-packages of the target software package, the vehicle may choose to continue broadcasting target sub-packages to other nearby vehicles via vehicle-vehicle communication as a seed vehicle, in which case additional virtual points may preferably be obtained, or may also choose to stop broadcasting target sub-packages to other nearby vehicles.

Therefore, by using the Vehicle-to-Everything and seed download technology to realize the remote software upgrade of vehicles, the remote software upgrade experience of users can be significantly improved, the "bottleneck" problem of bandwidth limitation in the traditional scheme is solved, and the server crash problem caused by a large number of simultaneous remote update package downloads is also avoided.

Those skilled in the art will appreciate that the system 100 and its modules of the present disclosure may be implemented in either hardware or software, and the modules may be merged or combined in any suitable manner.

Figure 3 illustrates a schematic diagram of a software package passive reception mode 300 in accordance with an embodiment of the present disclosure.

As shown in Fig. 3, in the passive reception mode, a seed vehicle S1 acquires a target software package from an OTA server, wherein the target software package is divided into a plurality of target sub-packages (for example, X target sub-packages with labels 1 to X). Seed vehicles can be selected by ranking one or more of virtual scores, software update installation completion rates, software update installation duration, or user levels.

The seed vehicle S1 then broadcasts one or more of the plurality of target sub-packets to other vehicles (e.g. V1... Vn) within a V2X communication distance. For example, when the seed vehicle S1 is traveling on the road, it may sequentially broadcast X target sub-packages (e.g. from 1^{st} target sub-package to X^{th} target sub-packet) to other nearby vehicles via vehicle-to-vehicle communication, and the user vehicle (e.g. V1) may continuously collect its desired target sub-packages from those seed vehicles (i.e. check whether the broadcast sub-package exists after receiving the broadcast sub-package, and if so, discard the sub-package) until it acquires all the target sub-packages to complete the remote software update. At the same time, these user vehicles will also broadcast their own target sub-packages to other user vehicles within the V2X communication distance, in which case these user vehicles become seed vehicles.

Of course, it can be appreciated that in the above case where the target sub-packages are broadcast sequentially by the seed vehicles, since the broadcasting is for example always start from the 1^{st} target sub-package, more vehicles on the road have the 1^{st} target sub-package, and it is needed to wait for a long time to acquire subsequent target sub-packages, which makes the sub-package acquisition efficiency low and may lead to deadlock problem.

It will be appreciated that any other algorithms known to those in the art can be utilized to ensure that the user vehicle receives and processes only the target sub-packages it lacks and discards target sub-packages it has owned.

Therefore, it is preferable that one or more of the X target sub-packages can be randomly broadcast by the seed vehicle S1 to other vehicles nearby via vehicle-vehicle communication, thereby effectively avoiding the deadlock problem mentioned above and improving the sub-package acquisition efficiency.

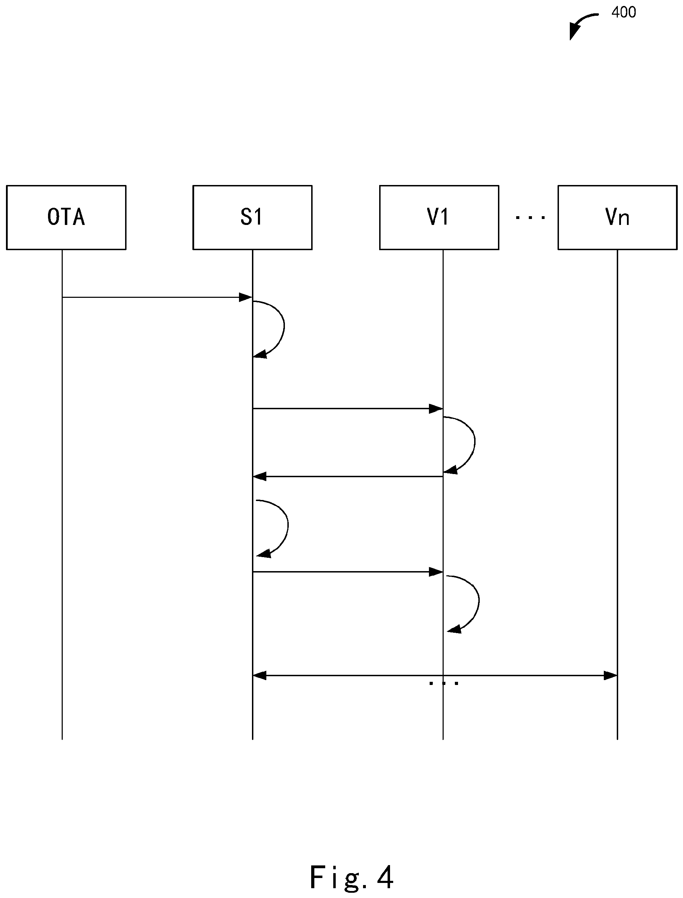

Figure 4 illustrates a schematic diagram of a software package active reception mode 400 in accordance with an embodiment of the present disclosure.

As shown in Fig. 4, in the active reception mode, a seed vehicle S1 acquires a target software package from an OTA server, wherein the target software package is divided into a plurality of target sub-packages (for example, X target sub-packages with labels 1 to X).

The seed vehicle S1 then broadcasts one or more of a plurality of target sub-packets sequentially or randomly to other vehicles (e.g. V1... Vn) within the V2X communication distance.

In this scenario, the user vehicle (e.g. vehicle V1) may check its currently desired target sub-packages (i.e. target sub-packages that have not been received) and send a request for the desired target sub-packages to the seed vehicle S1.

After the seed vehicle S1 receives the request for sub-packages from the vehicle V1, the seed vehicle S1 may intentionally broadcast/transmit the desired target sub-packages prioritized over other target sub-packages in the time slot (e.g. if the seed vehicle receives the request for the target sub-package labeled 2, it may prioritize broadcasting/transmitting the target sub-package labeled 2 in the time slot).

Compared to the passive reception mechanism described in Fig. 3, this request and response-based mechanism (i.e., on-demand mechanism) can significantly save time in fetching all target sub-packages to complete remote software update without having to spend time acquiring owned target sub-packages and discarding them.

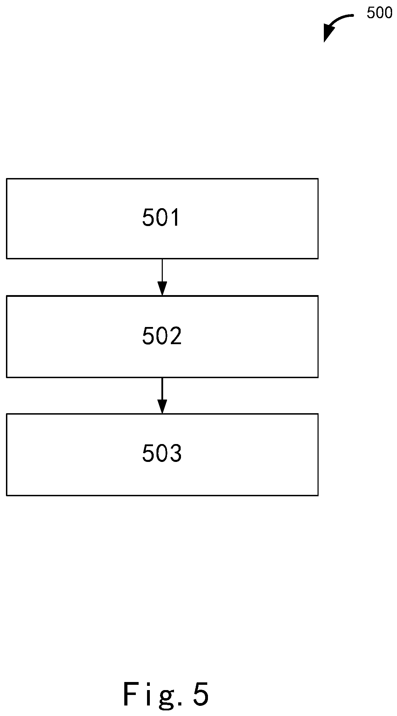

Fig. 5 illustrates an example flow diagram of a remote software update method 500 for a user vehicle according to an embodiment of the present disclosure.

The method 500 begins at step 501, where the update check module 101 may determine whether a target software package needs to be acquired for software update, wherein the target software package is divided into a plurality of target sub-packages.

In one embodiment, the update checking module 101 may determine that a target software package needs to be acquired for software update upon receiving a software update notification from a remote update server or upon checking that a current software version does not coincide with a latest software version from the remote update server
In one embodiment, a number of target sub-packages of the target software package may be determined based on a size of the target software package and network bandwidth limitations.

In another embodiment, the number of target sub-packages of the target software package may be adjusted based on a current network congestion situation, wherein the number of target sub-packages is small when network is idle and large when network is busy.

At step 502, the update acquisition module 102 may receive one or more of the plurality of target sub-packages from a seed vehicle within a V2X communication distance from the vehicle in response to a determination that a software update is to be performed, the seed vehicle having acquired one or more of the plurality of target sub-packages.

In one embodiment, the update acquisition module 102 may passively receive one or more of the plurality of target sub-packages from the seed vehicle that are randomly or sequentially broadcasted; and may discard target sub-packages the vehicle has owned.

In another embodiment, the update acquisition module 102 may request the seed vehicle for desired target sub-packages from the seed vehicle; and may receive the desired target sub-packages from the seed vehicle, wherein the desired target sub-packages is prioritized by the seed vehicle.

The two different reception modes (active and passive reception modes) described above may be as described above with reference to Figs. 3-4.

In one embodiment, the update broadcast module 104 may broadcast, as a seed vehicle, the received one or more of the plurality of target sub-packages to other vehicles within a V2X communication distance from the vehicle upon receiving one or more of the plurality of target sub-packages.

Further optionally, the update acquisition module 102 may download remaining target sub-packages that have not been received from the seed vehicle directly from a remote update server when not all target sub-packages of the target software package have been received.

At step 503, the update completion module 103 may complete the remote software update when all target sub-packages of the target software package are received.

Therefore, during the remote software update/upgrade, the update sub-packages are obtained from seed vehicles which have downloaded the update package via V2V communication, so as to realize the software update/upgrade at the vehicle end, thereby avoiding the server crash problem and bandwidth limitation problem caused by downloading a large number of remote update packages at the same time, and significantly improving the remote software upgrade experience of users.

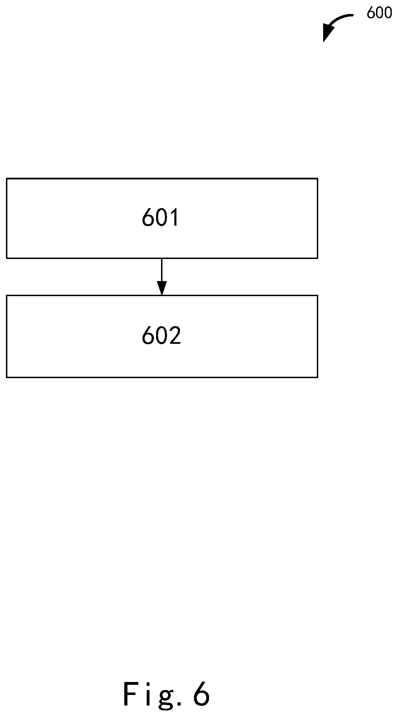

Fig. 6 illustrates an example flow diagram of a remote software update method 600 for a seed vehicle in accordance with an embodiment of the present disclosure.

Method 600 begins at step 601, where a seed vehicle may receive a target software package from a remote update server to complete a remote software update in response to receiving a software update notification from the remote update server, wherein the target software package is divided into a plurality of target sub-packages.

In one embodiment, the seed vehicle may be selected by ranking one or more of: a virtual scores indicating contribution degrees as a seed vehicle; software installation completion rates; software installation duration; or user levels.

At step 602, the seed vehicle may broadcast one or more of the plurality of target sub-packages to other vehicles within a V2X communication distance from the vehicle.

In one embodiment, in a passive reception mode, the seed vehicle may randomly or sequentially broadcast one or more of the plurality of target sub-packages to other nearby vehicles via V2X communication.

In another embodiment, in an active reception mode, the seed vehicle may receive a request for desired target sub-packages from another vehicle within a V2X communication distance from the vehicle, and may prioritize transmitting the desired target sub-packages to said another vehicle.

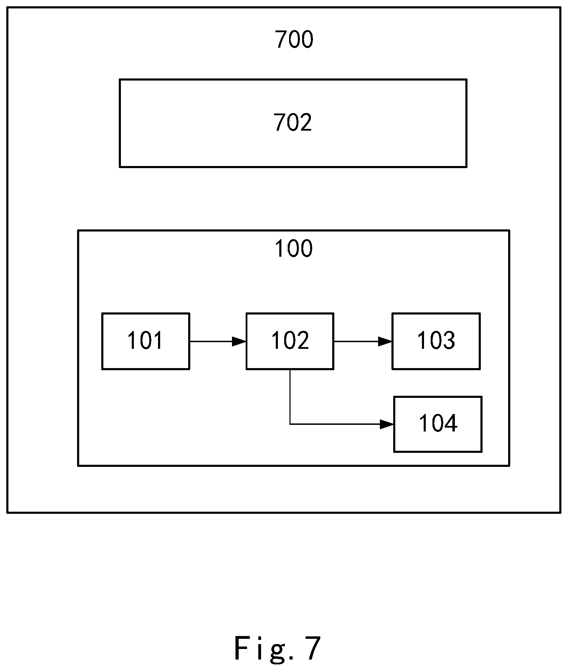

Fig. 7 illustrates an exemplary vehicle 700 supporting remote software update in accordance with an embodiment of the present disclosure.

The vehicle 700 may include a system 100 as shown in Fig. 1 that may determine whether a target software package needs to be acquired for software update, wherein the target software package is divided into a plurality of target sub-packages; receive one or more of the plurality of target sub-packages from a seed vehicle within a V2X communication distance from the vehicle in response to a determination that a software update is to be performed, the seed vehicle having acquired one or more of the plurality of target sub-packages; and complete the remote software update when all target sub-packages of the target software package are received.

Additionally the vehicle 700 may also include a communication system 702 which may be configured to communicate with other vehicles within a predetermined range, remote update servers, and smart devices of users, etc., via Vehicle-to-Everything (V2X) communication.

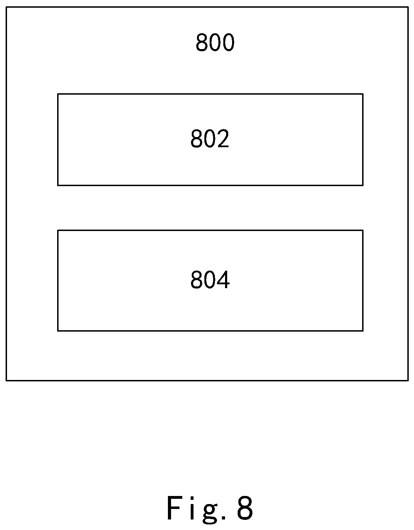

Fig. 8 illustrates a schematic architecture diagram 800 of a remote software update system in accordance with an embodiment of the present disclosure. The system 800 may be configured to perform aspects of the various methods described herein including for example the methods described with respect to Figs. 5 or 6.

As shown in Fig. 8, the system 800 may include one or more processors 802. The one or more processors 802 may include a central processing unit (CPU) which in some examples may be a multi-core CPU. Instructions executed at the CPU may for example be loaded from program memory associated with the CPU or may be loaded from memory 804. The one or more processors 802 may also include additional processing components customized for a particular function such as a graphics processing unit (GPU), a digital signal processor (DSP), a neural processing unit (NPU). In some examples the one or more processors 802 may be based on ARM or RISC-V instruction sets.

The System 800 also includes a memory 804. The memory 804 may include RAM, ROM, or a combination thereof. The memory 804 may store computer-executable instructions that, when executed by at least one processor 802, cause the at least one processor to perform various functions described herein, including: determining whether a target software package needs to be acquired for software update, wherein the target software package is divided into a plurality of target sub-packages; receiving one or more of the plurality of target sub-packages from a seed vehicle within a V2X communication distance from the vehicle in response to a determination that a software update is to be performed, the seed vehicle having acquired one or more of the plurality of target sub-packages; and completing the remote software update when all target sub-packages of the target software package are received. In some cases, the memory 804 may in particular include a BIOS that may control basic hardware or software operations such as interaction with peripheral components or devices.

It will be appreciated that Fig. 8 is only one example of a system and other systems including fewer additional or alternative aspects may be consistent with the present disclosure.

The various illustrative blocks and modules described in conjunction with the disclosure herein may be implemented or executed with a general-purpose processor, DSP, ASIC, FPGA or other programmable logic device, discrete gate or transistor logic, discrete hardware components, or any combination thereof designed to perform the functions described herein. The general-purpose processor may be a microprocessor, but in an alternative, the processor may be any conventional processor, controller, microcontroller, or state machine. The processor may also be implemented as a combination of computing devices (e.g. a combination of a DSP and a microprocessor, multiple microprocessors, one or more microprocessors in cooperation with a DSP core, or any other such configuration).

The functions described herein may be implemented in hardware, software executed by a processor, firmware or any combination thereof. If implemented in software executed by a processor, the functions may be stored as one or more instructions or codes on a computer-readable medium or transferred by the computer-readable medium. Other examples and implementations fall within the scope of the present disclosure and the appended claims. For example, due to the nature of software, the functions described herein may be implemented using software executed by a processor, hardware, firmware, hardwired or any combination thereof. Features that implement the functions may also be physically located in various locations including being distributed so that portions of the function are implemented at different physical locations.

The content already described above includes examples of various aspects of the claimed subject matter. Of course, it is not possible to describe every conceivable combination of components or methods for the purpose of depicting the claimed subject matter, but one of ordinary skill in the art will recognize that many further combinations and arrangements of the claimed subject matter are possible.

## Claims

1. A remote software update method for a vehicle, the method comprising:
determining (501) whether a target software package needs to be acquired for software update, wherein the target software package is divided into a plurality of target sub-packages, wherein the number of target sub-packages of the target software package is adjusted based on a current network congestion situation, wherein the number of target sub-packages is small when the network is idle and large when the network is busy;
receiving (502) one or more of the plurality of target sub-packages from a seed vehicle within a V2X communication distance from the vehicle in response to determining that a software update is to be performed, the seed vehicle having acquired one or more of the plurality of target sub-packages; and
completing (503) the remote software update when all target sub-packages of the target software package are received.

2. The method according to claim 1, wherein determining whether a target software package needs to be acquired for software update further comprises:
determining that a target software package needs to be acquired for software update upon receiving a software update notification from a remote update server or upon checking out that a current software version does not coincide with a latest software version from the remote update server.

3. The method according to claim 1, wherein receiving one or more of the plurality of target sub-packages from the seed vehicle further comprises:
passively receiving one or more of the plurality of target sub-packages from the seed vehicle, the one or more of the plurality of target sub-packages being randomly or sequentially broadcast; and
discarding target sub-packages the vehicle has owned.

4. The method according to claim 1, wherein receiving one or more of the plurality of target sub-packages from the seed vehicle further comprises:
requesting the seed vehicle for desired target sub-packages; and
receiving the desired target sub-packages from the seed vehicle, wherein transmission of the desired target sub-packages is prioritized by the seed vehicle.

5. The method according to claim 1, further comprising:
broadcasting, as a seed vehicle, the received one or more of the plurality of target sub-packages to other vehicles within a V2X communication distance from the vehicle upon receiving one or more of the plurality of target sub-packages.

6. The method according to claim 1, wherein a number of target sub-packages of the target software package is determined based on a size of the target software package and network bandwidth limitations.

7. The method according to claim 1, further comprising:
downloading remaining target sub-packages that have not been received from the seed vehicle directly from a remote update server when not all target sub-packages of the target software package have been received.

8. The method according to claim 1, wherein the seed vehicle is selected by ranking one or more of:
virtual scores indicating contribution degrees as a seed vehicle;
software installation completion rates;
software installation duration; or
user levels.

9. A remote software update system for a vehicle, the system comprising:
an update check module (101, 501) configured to determine whether a target software package needs to be acquired for software update, wherein the target software package is divided into a plurality of target sub-packages, wherein the number of target sub-packages of the target software package is adjusted based on a current network congestion situation, wherein the number of target sub-packages is small when the network is idle and large when the network is busy;
an update acquisition module (102, 502)) configured to receive one or more of the plurality of target sub-packages from a seed vehicle within a V2X communication distance from the vehicle in response to determining that a software update is to be performed, the seed vehicle having acquired one or more of the plurality of target sub-packages; and
an update completion module (103, 503) configured to complete the remote software update when all target sub-packages of the target software package are received.

10. The system according to claim 9, wherein the update acquisition module further configured to:
receive one or more of the plurality of target sub-packages from the seed vehicle passively, the one or more of the plurality of target sub-packages being randomly or sequentially broadcast; and
discard existing target sub-packages of the vehicle.

11. The system according to claim 9, wherein the update acquisition module further configured to:
request the seed vehicle for desired target sub-packages; and
receive the desired target sub-packages from the seed vehicle, wherein transmission of the desired target sub-packages is prioritized by the seed vehicle.

12. The system according to claim 9, further comprising:
an update broadcast module configured to broadcast, as a seed vehicle, the received one or more of the plurality of target sub-packages to other vehicles within a V2X communication distance from the vehicle upon receiving one or more of the plurality of target sub-packages.

13. A vehicle comprising the remote software update system of any one of claims 9-12.

14. A computer-readable storage medium storing instructions that, when executed, cause a vehicle to perform the method of any one of claims 1-8.

## Patentansprüche

1. Ein Verfahren zur Fernaktualisierung von Software für ein Fahrzeug, wobei das Verfahren umfasst:
Bestimmen (501), ob ein Ziel-Softwarepaket für eine Softwareaktualisierung erworben werden muss, wobei das Ziel-Softwarepaket in mehrere Ziel-Teilpakete unterteilt ist, wobei die Anzahl der Ziel-Teilpakete des Ziel-Softwarepakets basierend auf einer aktuellen Netzwerküberlastungssituation angepasst wird, wobei die Anzahl der Ziel-Teilpakete klein ist, wenn das Netzwerk nicht ausgelastet ist, und groß, wenn das Netzwerk ausgelastet ist;
Empfangen (502) eines oder mehrerer der Vielzahl von Ziel-Teilpaketen von einem Seed-Fahrzeug innerhalb einer V2X-Kommunikationsdistanz vom Fahrzeug als Antwort auf die Bestimmung, dass eine Softwareaktualisierung durchgeführt werden soll, wobei das Seed-Fahrzeug eines oder mehrere der Vielzahl von Ziel-Teilpaketen erworben hat; und
Abschließen (503) der Fernaktualisierung der Software, wenn alle Ziel-Teilpakete des Ziel-Softwarepakets empfangen wurden.

2. Verfahren nach Anspruch 1, wobei das Bestimmen, ob ein Ziel-Softwarepaket für eine Softwareaktualisierung erworben werden muss, ferner umfasst:
Bestimmen, dass ein Ziel-Softwarepaket für eine Softwareaktualisierung erworben werden muss, nach Empfang einer Softwareaktualisierungsbenachrichtigung von einem entfernten Aktualisierungsserver oder nach Überprüfung, dass eine aktuelle Softwareversion nicht mit einer neuesten Softwareversion vom entfernten Aktualisierungsserver übereinstimmt.

3. Verfahren nach Anspruch 1, wobei das Empfangen eines oder mehrerer der Vielzahl von Ziel-Teilpaketen vom Seed-Fahrzeug ferner umfasst:
Passives Empfangen eines oder mehrerer der Vielzahl von Ziel-Teilpaketen vom Seed-Fahrzeug, wobei das eine oder die mehreren der Vielzahl von Ziel-Teilpaketen zufällig oder sequentiell gesendet werden; und
Verwerfen von Ziel-Teilpaketen, die das Fahrzeug bereits besitzt.

4. Verfahren nach Anspruch 1, wobei das Empfangen eines oder mehrerer der Vielzahl von Ziel-Teilpaketen vom Seed-Fahrzeug ferner umfasst:
Anfordern der gewünschten Ziel-Teilpakete vom Seed-Fahrzeug; und
Empfangen der gewünschten Ziel-Teilpakete vom Seed-Fahrzeug, wobei die Übertragung der gewünschten Ziel-Teilpakete vom Seed-Fahrzeug priorisiert wird.

5. Verfahren nach Anspruch 1, ferner umfassend:
Senden, als Seed-Fahrzeug, der empfangenen einen oder mehreren der Vielzahl von Ziel-Teilpaketen an andere Fahrzeuge innerhalb einer V2X-Kommunikationsdistanz vom Fahrzeug nach Empfang eines oder mehrerer der Vielzahl von Ziel-Teilpaketen.

6. Verfahren nach Anspruch 1, wobei eine Anzahl von Ziel-Teilpaketen des Ziel-Softwarepakets basierend auf einer Größe des Ziel-Softwarepakets und Netzwerkbandbreitenbeschränkungen bestimmt wird.

7. Verfahren nach Anspruch 1, ferner umfassend:
Herunterladen verbleibender Ziel-Teilpakete, die nicht vom Seed-Fahrzeug empfangen wurden, direkt von einem entfernten Aktualisierungsserver, wenn nicht alle Ziel-Teilpakete des Ziel-Softwarepakets empfangen wurden.

8. Verfahren nach Anspruch 1, wobei das Seed-Fahrzeug durch Bewertung eines oder mehrerer der folgenden Kriterien ausgewählt wird:
virtuelle Punktzahlen, die Beitragsgrade als Seed-Fahrzeug anzeigen;
Softwareinstallations-Abschlussraten;
Softwareinstallationsdauer; oder
Benutzerstufen.

9. Ein Fernaktualisierungssystem für Software für ein Fahrzeug, wobei das System umfasst:
ein Aktualisierungsprüfmodul (101, 501), das konfiguriert ist zu bestimmen, ob ein Ziel-Softwarepaket für eine Softwareaktualisierung erworben werden muss, wobei das Ziel-Softwarepaket in mehrere Ziel-Teilpakete unterteilt ist, wobei die Anzahl der Ziel-Teilpakete des Ziel-Softwarepakets basierend auf einer aktuellen Netzwerküberlastungssituation angepasst wird, wobei die Anzahl der Ziel-Teilpakete klein ist, wenn das Netzwerk nicht ausgelastet ist, und groß, wenn das Netzwerk ausgelastet ist;
ein Aktualisierungserwerbsmodul (102, 502), das konfiguriert ist, eines oder mehrere der Vielzahl von Ziel-Teilpaketen von einem Seed-Fahrzeug innerhalb einer V2X-Kommunikationsdistanz vom Fahrzeug als Antwort auf die Bestimmung zu empfangen, dass eine Softwareaktualisierung durchgeführt werden soll, wobei das Seed-Fahrzeug eines oder mehrere der Vielzahl von Ziel-Teilpaketen erworben hat; und
ein Aktualisierungsabschlussmodul (103, 503), das konfiguriert ist, die Fernaktualisierung der Software abzuschließen, wenn alle Ziel-Teilpakete des Ziel-Softwarepakets empfangen wurden.

10. System nach Anspruch 9, wobei das Aktualisierungserwerbsmodul ferner konfiguriert ist:
eines oder mehrere der Vielzahl von Ziel-Teilpaketen vom Seed-Fahrzeug passiv zu empfangen, wobei das eine oder die mehreren der Vielzahl von Ziel-Teilpaketen zufällig oder sequentiell gesendet werden; und
vorhandene Ziel-Teilpakete des Fahrzeugs zu verwerfen.

11. System nach Anspruch 9, wobei das Aktualisierungserwerbsmodul ferner konfiguriert ist:
gewünschte Ziel-Teilpakete vom Seed-Fahrzeug anzufordern; und
die gewünschten Ziel-Teilpakete vom Seed-Fahrzeug zu empfangen, wobei die Übertragung der gewünschten Ziel-Teilpakete vom Seed-Fahrzeug priorisiert wird.

12. System nach Anspruch 9, ferner umfassend:
ein Aktualisierungssendemodul, das konfiguriert ist, als Seed-Fahrzeug die empfangenen einen oder mehreren der Vielzahl von Ziel-Teilpaketen an andere Fahrzeuge innerhalb einer V2X-Kommunikationsdistanz vom Fahrzeug zu senden, nach Empfang eines oder mehrerer der Vielzahl von Ziel-Teilpakete.

13. Ein Fahrzeug, das das Fernaktualisierungssystem für Software nach einem der Ansprüche 9-12 umfasst.

14. Ein computerlesbares Speichermedium, das Anweisungen speichert, die, wenn sie ausgeführt werden, ein Fahrzeug veranlassen, das Verfahren nach einem der Ansprüche 1-8 durchzuführen.

## Revendications

1. Une méthode de mise à jour logicielle à distance pour un véhicule, la méthode comprenant :
la détermination (501) si un paquet logiciel cible doit être acquis pour une mise à jour logicielle, où le paquet logiciel cible est divisé en une pluralité de sous-paquets cibles, où le nombre de sous-paquets cibles du paquet logiciel cible est ajusté en fonction de la situation actuelle de congestion du réseau, où le nombre de sous-paquets cibles est faible lorsque le réseau est inactif et élevé lorsque le réseau est occupé ;
la réception (502) d'un ou plusieurs de la pluralité de sous-paquets cibles d'un véhicule source situé à une distance de communication V2X du véhicule en réponse à la détermination qu'une mise à jour logicielle doit être effectuée, le véhicule source ayant acquis un ou plusieurs de la pluralité de sous-paquets cibles ; et
l'achèvement (503) de la mise à jour logicielle à distance lorsque tous les sous-paquets cibles du paquet logiciel cible sont reçus.

2. La méthode selon la revendication 1, où la détermination si un paquet logiciel cible doit être acquis pour une mise à jour logicielle comprend en outre :
la détermination qu'un paquet logiciel cible doit être acquis pour une mise à jour logicielle lors de la réception d'une notification de mise à jour logicielle d'un serveur de mise à jour distant ou lors de la vérification qu'une version logicielle actuelle ne coïncide pas avec la dernière version logicielle du serveur de mise à jour distant.

3. La méthode selon la revendication 1, où la réception d'un ou plusieurs de la pluralité de sous-paquets cibles du véhicule source comprend en outre :
la réception passive d'un ou plusieurs de la pluralité de sous-paquets cibles du véhicule source, l'un ou plusieurs de la pluralité de sous-paquets cibles étant diffusés de manière aléatoire ou séquentielle ; et
l'élimination des sous-paquets cibles que le véhicule possède déjà.

4. La méthode selon la revendication 1, où la réception d'un ou plusieurs de la pluralité de sous-paquets cibles du véhicule source comprend en outre :
la demande au véhicule source des sous-paquets cibles souhaités ; et
la réception des sous-paquets cibles souhaités du véhicule source, où la transmission des sous-paquets cibles souhaités est priorisée par le véhicule source.

5. La méthode selon la revendication 1, comprenant en outre :
la diffusion, en tant que véhicule source, de l'un ou plusieurs de la pluralité de sous-paquets cibles reçus à d'autres véhicules situés à une distance de communication V2X du véhicule lors de la réception d'un ou plusieurs de la pluralité de sous-paquets cibles.

6. La méthode selon la revendication 1, où un nombre de sous-paquets cibles du paquet logiciel cible est déterminé en fonction de la taille du paquet logiciel cible et des limitations de bande passante du réseau.

7. La méthode selon la revendication 1, comprenant en outre :
le téléchargement des sous-paquets cibles restants qui n'ont pas été reçus du véhicule source directement à partir d'un serveur de mise à jour distant lorsque tous les sous-paquets cibles du paquet logiciel cible n'ont pas été reçus.

8. La méthode selon la revendication 1, où le véhicule source est sélectionné en classant un ou plusieurs des éléments suivants :
des scores virtuels indiquant les degrés de contribution en tant que véhicule source ;
des taux d'achèvement d'installation de logiciels ;
la durée d'installation de logiciels ; ou
les niveaux d'utilisateur.

9. Un système de mise à jour logicielle à distance pour un véhicule, le système comprenant :
un module de vérification de mise à jour (101, 501) configuré pour déterminer si un paquet logiciel cible doit être acquis pour une mise à jour logicielle, où le paquet logiciel cible est divisé en une pluralité de sous-paquets cibles, où le nombre de sous-paquets cibles du paquet logiciel cible est ajusté en fonction de la situation actuelle de congestion du réseau, où le nombre de sous-paquets cibles est faible lorsque le réseau est inactif et élevé lorsque le réseau est occupé ;
un module d'acquisition de mise à jour (102, 502) configuré pour recevoir un ou plusieurs de la pluralité de sous-paquets cibles d'un véhicule source situé à une distance de communication V2X du véhicule en réponse à la détermination qu'une mise à jour logicielle doit être effectuée, le véhicule source ayant acquis un ou plusieurs de la pluralité de sous-paquets cibles ; et
un module d'achèvement de mise à jour (103, 503) configuré pour achever la mise à jour logicielle à distance lorsque tous les sous-paquets cibles du paquet logiciel cible sont reçus.

10. Le système selon la revendication 9, où le module d'acquisition de mise à jour est en outre configuré pour :
recevoir passivement un ou plusieurs de la pluralité de sous-paquets cibles du véhicule source, l'un ou plusieurs de la pluralité de sous-paquets cibles étant diffusés de manière aléatoire ou séquentielle ; et
éliminer les sous-paquets cibles existants du véhicule.

11. Le système selon la revendication 9, où le module d'acquisition de mise à jour est en outre configuré pour :
demander au véhicule source les sous-paquets cibles souhaités ; et
recevoir les sous-paquets cibles souhaités du véhicule source, où la transmission des sous-paquets cibles souhaités est priorisée par le véhicule source.

12. Le système selon la revendication 9, comprenant en outre :
un module de diffusion de mise à jour configuré pour diffuser, en tant que véhicule source, l'un ou plusieurs de la pluralité de sous-paquets cibles reçus à d'autres véhicules situés à une distance de communication V2X du véhicule lors de la réception d'un ou plusieurs de la pluralité de sous-paquets cibles.

13. Un véhicule comprenant le système de mise à jour logicielle à distance selon l'une quelconque des revendications 9 à 12.

14. Un support de stockage lisible par ordinateur stockant des instructions qui, lorsqu'elles sont exécutées, amènent un véhicule à exécuter la méthode selon l'une quelconque des revendications 1 à 8.
